(19) Europäisches Patentamt / European Patent Office / Office européen des brevets

(11) **EP 3 541 126 B1**

(12) **EUROPEAN PATENT SPECIFICATION**

(45) Date of publication and mention of the grant of the patent:
**24.02.2021 Bulletin 2021/08**

(21) Application number: **17870364.1**

(22) Date of filing: **06.11.2017**

(51) Int Cl.:
*H04W 64/00* (2009.01)     *H04W 4/02* (2018.01)
*G01S 5/06* (2006.01)

(86) International application number:
**PCT/CN2017/109538**

(87) International publication number:
**WO 2018/086495 (17.05.2018 Gazette 2018/20)**

(54) **POSITIONING METHOD AND POSITIONING SYSTEM**

POSITIONIERUNGSVERFAHREN UND POSITIONIERUNGSSYSTEM

PROCÉDÉ ET SYSTÈME DE POSITIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.11.2016  CN 201610995373**

(43) Date of publication of application:
**18.09.2019  Bulletin 2019/38**

(73) Proprietor: **ZTE Corporation**
**Shenzhen, Guangdong 518057 (CN)**

(72) Inventors:
• **XIANG, Pingye**
  **Shenzhen**
  **Guangdong 518057 (CN)**
• **WEI, Yuanqing**
  **Shenzhen**
  **Guangdong 518057 (CN)**

(74) Representative: **Carangelo, Pierluigi**
**Jacobacci & Partners S.p.A.**
**Via Tomacelli 146**
**00186 Roma (IT)**

(56) References cited:
WO-A1-2012/128779     CN-A- 102 395 197
CN-A- 103 781 095      CN-A- 103 906 228
US-A1- 2005 130 669    US-A1- 2009 322 615

**Description**

TECHNICAL FIELD

The present disclosure relates to the field of wireless positioning, and in particular to a positioning method and a positioning base station, a positioning server and a positioning system.

BACKGROUND

With the development of the mobile Internet, the use of the positioning function is more and more frequent. Generally speaking, the positioning is divided into outdoor positioning and indoor positioning. For outdoor positioning, it can be carried out by satellite signals, such as Global Positioning System (GPS) and BeiDou Navigation Satellite System (BDS). On the other hand, for indoor positioning in complex indoor or closed environments, such as large waiting rooms, large venues, stadiums, large office buildings, underground mines, etc., due to occlusion and serious attenuation of satellite signals, it is impossible to use satellite signals for positioning. However, since such environment requires hot spot coverage of a communication network anytime and anywhere, a base station of the communication system can be used for positioning. The specific methods include a Cell-ID method, a fingerprint method, an Angle of Arrival (AOA) method, a Time of Arrival (TOA) method and a Time Difference of Arrival (TDOA) method, in which the Cell-ID method has insufficient positioning accuracy; the fingerprint method needs to collect a large number of signal features, and the cost is high; the AOA method requires an antenna array to have high spatial resolution; the TOA method measures a signal transmission delay value between the base station and the terminal, and then according to the delay value estimates the actual distance between the base station and the terminal, and then uses the actual distance between a plurality of base stations and the terminal to determine the position of the terminal according to a triangular relationship; and the TDOA method uses the estimated delay as an intermediate variable based on the existing TOA method, and eliminates the intermediate variable with a mathematical transformation method, to establish a direct relationship between a geographical location and a positioning terminal, which can reduce the error caused by the estimation of the intermediate variable. The TOA method and the TDOA method are practical methods for indoor positioning.

However, in a three-dimensional space, in order to obtain accurate positioning, the TDOA method requires simultaneous acquisition of time differences of arrival and reception of signals from more than four base stations, and to obtain an accurate time difference of arrival and reception of signals between base stations, the positioning system needs to ensure absolute time synchronization between the base stations. If the base stations do not implement absolute time synchronization, the time offset of transmitting the positioning signal directly causes an error in the positioning estimation. However, it is difficult to achieve absolute time synchronization between base stations in the existing communication network.

Therefore, how to eliminate the positioning error caused by un-synchronization of the base stations in the TDOA method and improve the positioning accuracy is an urgent problem to be solved.

This section provides background information related to the present invention which is not necessarily prior art

Prior art documents US 2005/130669 A1 and US 2009/322615 A1 relate to determining a position of a terminal, using base stations and a reference terminal at a known fixed location.

SUMMARY

In view of above, embodiments of the present disclosure intend to provide a positioning method, and a positioning system, so as to eliminate positioning errors caused by the un-synchronization of the base stations in the existing TDOA method, and improve positioning accuracy The invention is specified by the independent claims. Further embodiments are specified in the dependent claims.

The technical solution of the embodiments of the present disclosure is implemented as follows.

In the positioning method provided, the positioning server separately receives, from a plurality of base stations, time instant information when positioning reference signals sent by a terminal to be positioned arrive at the positioning base stations and time instant information when positioning reference signals sent by a reference terminal at a fixed location arrive at the positioning base stations, and calculates coordinates of the terminal to be positioned according to such time instant information. In this way, it can eliminate the positioning error caused by un-synchronization of the base stations in the TDOA method and can improve the positioning accuracy.

This section provides a summary of various implementations or examples of the technology described in the invention, and is not a comprehensive invention of the full scope or all features of the disclosed technology.

## BRIEF DESCRIPTION OF THE DRAWINGS

The drawings described herein are intended to provide understanding of the present disclosure, and are intended to constitute a part of the present application. The illustrative embodiments of the present disclosure and their description serve to explain the present disclosure, and do not constitute limiting on the present disclosure. In the drawing:

FIG. 1 is a flowchart of a first embodiment of a positioning method according to the present disclosure;
FIG. 2 is a flowchart of a second embodiment of a positioning method according to the present disclosure;
FIG. 3 is a flowchart of a third embodiment of a positioning method according to the present disclosure;
FIG. 4 is a flowchart of a fourth embodiment of a positioning method according to the present disclosure;
FIG. 5 is a flowchart of a fifth embodiment of a positioning method according to the present disclosure;
FIG. 6 is a schematic diagram of a positioning scenario according to the present disclosure;
FIG. 7 is a schematic block diagram of a first embodiment of a positioning server according to the present disclosure;
FIG. 8 is a schematic block diagram of a second embodiment of a positioning server according to the present disclosure;
FIG. 9 is a schematic block diagram of a second embodiment of a positioning server according to the present disclosure;
FIG. 10 is a schematic block diagram of a first embodiment of a positioning base station according to the present disclosure; and
FIG. 11 is a schematic block diagram of a second embodiment of a positioning base station according to the present disclosure.

## DETAILED DESCRIPTION

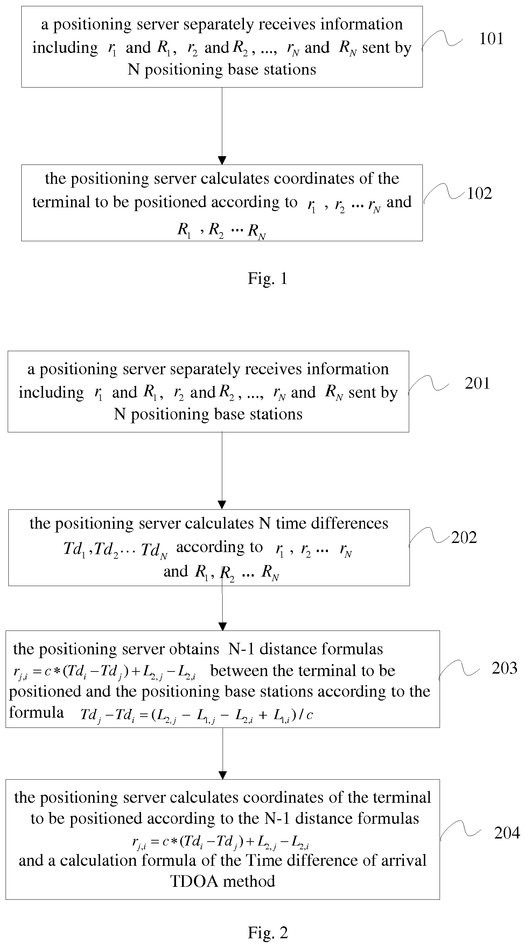

FIG. 1 is a flowchart of a first embodiment of a positioning method according to the present disclosure. As shown in FIG. 1, a positioning method according to the embodiment includes the following steps.

In step 101, a positioning server separately receives information including $r_1$ and $R_1$, $r_2$ and $R_2$, ..., $r_N$ and $R_N$ sent by N positioning base stations, where $r_1$, $r_2$... $r_N$ denote time instants when positioning reference signals sent by a terminal to be positioned arrive at the N positioning base stations, $R_1$, $R_2$... $R_N$ denote time instants when positioning reference signals sent by a reference terminal at a fixed location arrive at the N positioning base stations, and N is greater than or equal to 3.

In step 102, the positioning server calculates coordinates of the terminal to be positioned according to $r_1$, $r_2$... $r_N$ and $R_1$, $R_2$... $R_N$ .

In the positioning method provided by the embodiment, the positioning server separately receives, from a plurality of positioning base stations, time instant information when positioning reference signals sent by a terminal to be positioned arrive at the positioning base stations and time instant information when positioning reference signals sent by a reference terminal at a fixed location arrive at the positioning base stations, and calculates coordinates of the terminal to be positioned according to such time instant information. In this way, it can eliminate the positioning error caused by un-synchronization of the base stations in the TDOA method and can improve the positioning accuracy.

FIG. 2 is a flowchart of a second embodiment of a positioning method according to the present disclosure. As shown in FIG. 2, the positioning method provided in this embodiment includes the following steps.

In step 201, a positioning server separately receives information including $r_1$ and $R_1$, $r_2$ and $R_2$, ..., $r_N$ and $R_N$ sent by N positioning base stations, where $r_1$, $r_2$... $r_N$ denote time instants when positioning reference signals sent by a terminal to be positioned arrive at the N positioning base stations, $R_1$, $R_2$... $R_N$ denote time instants when positioning reference signals sent by a reference terminal at a fixed location arrive at the N positioning base stations, and N is greater than or equal to 3.

In step 202, the positioning server calculates N time differences, $Td_1$, $Td_2$ ... $Td_N$ according to $r_1$, $r_2$ ... $r_N$ and $R_1$, $R_2$ ... $R_N$, where $Td_1 = R_1 - r_1$, $Td_2 = R_2 - r_2$ ... $Td_N = R_N - r_N$ .

In step 203, the positioning server obtains N-1 distance formulas $r_{j,i} = c^*(Td_i - Td_j) + L_{2,j} - L_{2,i}$ between the terminal to be positioned and the positioning base stations according to the formula $Td_j - Td_i = (L_{2,j} - L_{1,j} - L_{2,i} + L_{1,i})/c$, where $r_{j,i} = L_{1,j} - L_{1,i}$, $L_{2,j}$ denotes a distance from the reference terminal at a fixed location to a positioning base station $j$, $L_{2,i}$ denotes a distance from the reference terminal at a fixed location to a positioning base station $i$, $L_{2,j}$ and $L_{2,i}$ are obtained from measurement, $L_{2,j}$ denotes a distance from the terminal to be positioned to a positioning base station $j$, $L_{1,i}$ denotes a distance from the terminal to be positioned to a positioning base station $i$, $c$ denotes a light speed; $i = 1$ or 2... or N, $j = 1, 2,..., N$ and $j \neq i$.

In step 204, the positioning server calculates coordinates of the terminal to be positioned according to the N-1 distance formulas $r_{j,i} = c^*(Td_i - Td_j) + L_{2,j} - L_{2,i}$ and a calculation formula of the Time difference of arrival TDOA method.

In the positioning method provided by the embodiment, the positioning server separately receives, from a plurality of positioning base stations, time instant information when positioning reference signals sent by a terminal to be positioned arrive at the positioning base stations and time instant information when positioning reference signals sent by a reference terminal at a fixed location arrive at the positioning base stations, calculates a Time difference of arrival between the terminal to be positioned and the reference terminal at a fixed location according to such time instant information, and in turn, calculates the coordinates of the terminal to be positioned. In this way, it can eliminate the positioning error caused by un-synchronization of the base stations in the TDOA method and can improve the positioning accuracy.

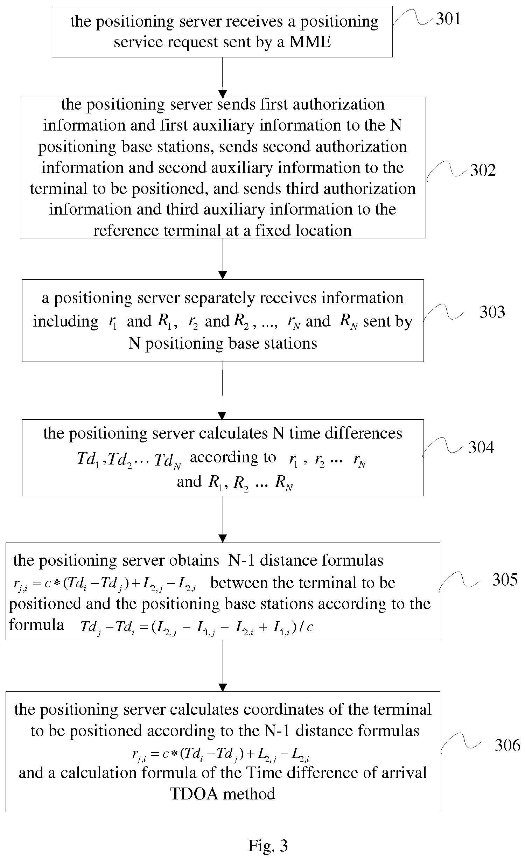

FIG. 3 is a flowchart of a third embodiment of a positioning method according to the present disclosure. As shown in FIG. 3, the positioning method provided in this embodiment includes the following steps.

In step 301, the positioning server receives a positioning service request sent by a Mobility Management Entity (MME). The positioning service request is used to position the terminal to be positioned.

In step 302, the positioning server sends first authorization information and first auxiliary information to the N positioning base stations, sends second authorization information and second auxiliary information to the terminal to be positioned, and sends third authorization information and third auxiliary information to the reference terminal at a fixed location. The first, second, and third authorization information are used to notify the N positioning base stations, the terminal to be positioned, and the reference terminal at a fixed location to start positioning, the first auxiliary information is used to identify the terminal to be positioned and the reference terminal at a fixed location, the second and third auxiliary information are used to identify N positioning base stations, and N is greater than or equal to 3.

It should be noted that, before starting the positioning, the N positioning base stations, the terminal to be positioned, and the reference terminal at a fixed location that are involved in the positioning have to know about the object to communicate with, so the first, second, and third auxiliary information respectively identify the communication objects for the N positioning base stations, the terminal to be positioned, and the reference terminal at a fixed location. In addition, the first auxiliary information further includes information indicating how the positioning base station handles an abnormal situation, the second auxiliary information further includes information indicating how the terminal to be positioned handles an abnormal situation, and the third auxiliary information further includes information indicating how the reference terminal handles an abnormal condition.

In step 303, the positioning server separately receives information including $r_1$ and $R_1$, $r_2$ and $R_2$, ..., $r_N$ and $R_N$ sent by N positioning base stations, where $r_1$, $r_2$... $r_N$ denote time instants when positioning reference signals sent by a terminal to be positioned arrive at the N positioning base stations, and $R_1$, $R_2$... $R_N$ denote time instants when positioning reference signals sent by a reference terminal at a fixed location arrive at the N positioning base stations.

In step 304, the positioning server calculates N time differences, $Td_1$, $Td_2$... $Td_N$ according to $r_1$, $r_2$ ... $r_N$ and $R_1$, $R_2$ ... $R_N$, where $Td_1 = R_1 - r_1$, $Td_2 = R_2 - r_2$ ...$Td_N = R_N - r_N$.

In step 305, the positioning server obtains N-1 distance formulas $r_{j,i} = c*(Td_i - Td_j) + L_{2,j} - L_{2,i}$ between the terminal to be positioned and the positioning base stations according to the formula $Td_j - Td_i = (L_{2,j} - L_{1,j} - L_{2,i} + L_{1,i}) / c$, where $r_{j,i} = L_{1,j} - L_{1,i}$, $L_{2,j}$ denotes a distance from the reference terminal at a fixed location to a positioning base station $j$, $L_{2,i}$ denotes a distance from the reference terminal at a fixed location to a positioning base station $i$, $L_{2,j}$ and $L_{2,i}$ are obtained from measurement, $L_{2,j}$ denotes a distance from the terminal to be positioned to a positioning base station $j$, $L_{1,i}$ denotes a distance from the terminal to be positioned to a positioning base station $i$, $c$ denotes a light speed; $i = 1$ or 2... or N, $j = 1, 2,..., N$ and $j \neq i$.

In step 306, the positioning server calculates coordinates of the terminal to be positioned according to the N-1 distance formulas $r_{j,i} = c*(Td_i - Td_j) + L_{2,j} - L_{2,i}$ and a calculation formula of the TDOA method.

Specifically, the positioning server calculates the coordinates of the terminal to be positioned by substituting the N-1 distance formulas $r_{j,i} = c*(Td_i - Td_j) + L_{2,j} - L_{2,i}$ into the calculation formula $2[X_{j,i}, Y_{j,i}, Z_{j,i} r_{j,i}]*[x, y, z, L_{1,i}]^T = K_j - K_i - r_{j,i}^2$ of the TDOA method, where, $(x, y, z)$ denotes the coordinates of the terminal to be positioned, $X_{j,i}, Y_{j,i}, Z_{j,i}$ denote respectively coordinate differences on axis $X$, $Y$ and $Z$ between the coordinates $(X_j, Y_j, Z_j)$ of the positioning base station $j$ and the coordinates $(X_i, Y_i, Z_i)$ of the positioning base station $i$; $K_j$ denotes a square sum of the coordinates of the positioning base station $j$, $K_j = X_j^2 + Y_j^2 + Z_j^2$, $K_i$ denotes a square sum of the coordinates of the positioning base station $i$, and $K_i = X_j^2 + Y_j^2 + Z_j^2$.

It should be noted that, when the positioning method provided by the present disclosure is applied in a scenario similar to a DDT taxi mode, only a plane coordinate of the terminal to be positioned, that is, the $X$ axis coordinate and the $Y$ axis coordinate in the coordinates of the terminal to be positioned, is required to be obtained. When the $X$ axis coordinate and the $Y$ axis coordinate in the coordinates $(x, y, z)$ of the terminal to be positioned is required to be obtained, N is greater than or equal to 4. That is, only at least 4 positioning base stations are required to obtain the coordinates of the terminal to be positioned. Correspondingly, the positioning server calculates the coordinates of the terminal to be positioned. The method is: calculating the coordinates of the terminal to be positioned by substituting N-1 distance formulas $r_{j,i} = c*(Td_i - Td_j) + L_{2,j} - L_{2,i}$ into the calculation formula $2[X_{j,i}, Y_{j,i}, r_{j,i}]*[x, y, L_{1,i}]^T = K_j - K_i - r_{j,i}^2$ of the TDOA method; where $(x, y)$ denotes the coordinates of the terminal to be positioned, $X_{j,i}, Y_{j,i}$ respectively denote coordinate differences on the $X$ axis and the $Y$ axis between the coordinates $(X_j, Y_j)$ of the positioning base station $j$ and the coordinates

$(X_i, Y_i)$ of the positioning base station $i$, $K_j$ denotes the square sum of the coordinates of the base station $j$, $K_j = X_j^2 + Y_j^2$, and $K_i$ denotes the square sum of the coordinates of the base station $i$.

When the positioning method provided by the present disclosure is applied in a multi-storey shopping mall or a high-rise building, it is required to obtain the spatial coordinates of the terminal to be positioned, that is, the $X$ axis coordinate, the $Y$ axis coordinate, and the $Z$ axis coordinate in the coordinates $(x, y, z)$ of the terminal to be positioned. When it is required to obtain the $X$ axis coordinate, the $Y$ axis coordinate, and the $Z$ axis coordinate in the coordinates $(x, y, z)$ of the terminal to be positioned, N is greater than or equal to 5, that is, only at least 5 positioning base stations are required to obtain the coordinates of the terminal to be positioned.

In the positioning method provided by the embodiment, the positioning server separately receives, from a plurality of positioning base stations, time instant information when positioning reference signals sent by a terminal to be positioned arrive at the positioning base stations and time instant information when positioning reference signals sent by a reference terminal at a fixed location arrive at the positioning base stations, calculates a Time difference of arrival between the terminal to be positioned and the reference terminal at a fixed location according to such time instant information, and in turn, calculates the coordinates of the terminal to be positioned. In this way, it can eliminate the positioning error caused by un-synchronization of the base stations in the TDOA method and can improve the positioning accuracy.

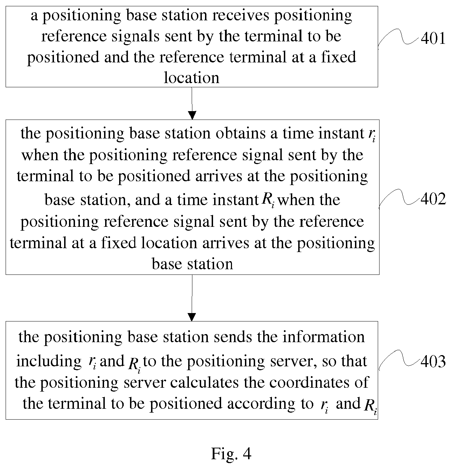

FIG. 4 is a flowchart of a fourth embodiment of a positioning method according to the present disclosure. As shown in FIG. 4, the positioning method provided in this embodiment includes the following steps.

In step 401, a positioning base station receives positioning reference signals sent by the terminal to be positioned and the reference terminal at a fixed location.

It should be noted that, in the specific implementation, before the positioning base station receives the positioning reference signals sent by the terminal to be positioned and the reference terminal at a fixed location, the positioning base station allocates a positioning reference signal resource to the terminal to be positioned and the reference terminal. At starting or ending of the positioning, the positioning base station sends a reconfiguration message to the terminal to be positioned and the reference terminal, and the reconfiguration message is used to notify the terminal to be positioned and the reference terminal to modify the previously configured positioning reference signals.

In step 402, the positioning base station obtains a time instant $r_i$ when the positioning reference signal sent by the terminal to be positioned arrives at the positioning base station, and a time instant $R_i$ when the positioning reference signal sent by the reference terminal at a fixed location arrives at the positioning base station, where, $i = 1$ or 2... or N, and N is greater than or equal to 3.

It should be noted that the positioning base station may obtain a time instant $r_i$ when the positioning reference signal sent by the terminal to be positioned arrives at the positioning base station, and a time instant $R_i$ when the positioning reference signal sent by the reference terminal at a fixed location arrives at the positioning base station by parsing the received positioning reference signals.

In step 403, the positioning base station sends the information including $r_i$ and $R_i$ to the positioning server, so that the positioning server calculates the coordinates of the terminal to be positioned according to $r_i$ and $R_i$.

In the positioning method provided by the embodiment, the positioning base station obtains a time instant $r_i$ when the positioning reference signal sent by the terminal to be positioned arrives at the positioning base station, and a time instant $R_i$ when the positioning reference signal sent by the reference terminal at a fixed location arrives at the positioning base station, and sends the information including $r_i$ and $R_i$ to the positioning server. It can eliminate the positioning error caused by un-synchronization of the base stations in the TDOA method and can improve the positioning accuracy.

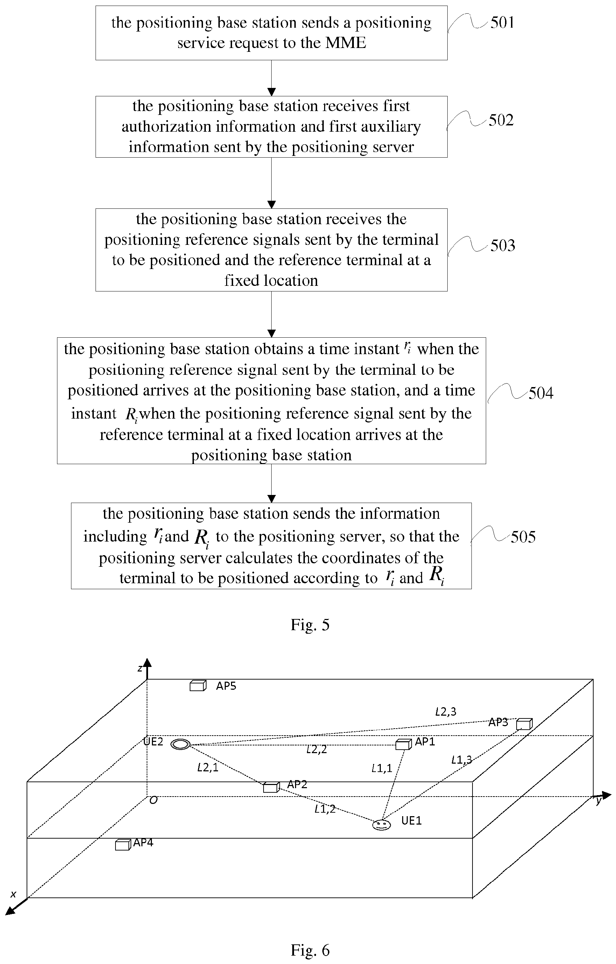

FIG. 5 is a flowchart of a fifth embodiment of a positioning method according to the present disclosure. As shown in FIG. 5, the positioning method provided in this embodiment includes the following steps.

In step 501, the positioning base station sends a positioning service request to the MME, where the positioning service request is used to position the terminal to be positioned.

In step 502, the positioning base station receives first authorization information and first auxiliary information sent by the positioning server. The first authorization information is used to notify the positioning base station to start positioning, and the first auxiliary information is used to identify the terminal to be positioned and the reference terminal at a fixed location. In addition, the first auxiliary information further includes information indicating how the positioning base station handles an abnormal situation.

In step 503, the positioning base station receives the positioning reference signals sent by the terminal to be positioned and the reference terminal at a fixed location.

Specifically, the positioning reference signal is an uplink reference signal, such as a Sounding Reference Signal (SRS) and a Demodulation Reference Signal (DMRS) signal.

In step 504, the positioning base station obtains a time instant $r_i$ when the positioning reference signal sent by the terminal to be positioned arrives at the positioning base station, and a time instant $R_i$ when the positioning reference signal sent by the reference terminal at a fixed location arrives at the positioning base station, where, $i = 1$ or 2... or N, and N is greater than or equal to 3.

In step 505, the positioning base station sends the information including $r_i$ and $R_i$ to the positioning server, so that the positioning server calculates the coordinates of the terminal to be positioned according to $r_i$ and $R_i$.

In the positioning method provided by the embodiment, the positioning base station obtains a time instant $r_i$ when the positioning reference signal sent by the terminal to be positioned arrives at the positioning base station, and a time instant $R_i$ when the positioning reference signal sent by the reference terminal at a fixed location arrives at the positioning base station, and sends the information including $r_i$ and $R_i$ to the positioning server. It can eliminate the positioning error caused by un-synchronization of the base stations in the TDOA method and can improve the positioning accuracy.

The positioning method provided by the present disclosure is described below with reference to a specific embodiment. FIG. 6 is a schematic diagram of a positioning scenario according to the present disclosure. As shown in FIG. 6, coordinates of the positioning base station at a known location is denoted as $AP_j = (X_j, Y_j, Z_j)$, the number of the positioning base stations is at least five, and coordinates of the reference terminal is denoted as $UE_2 = (x_2, y_2, z_2)$, and coordinates of the terminal to be positioned is denoted as $UE_1 = (x, y, z)$.

The MME receives a positioning service request with respect to $UE_1$ initiated by an entity. The entity may be a functional entity, such as a positioning base station and a terminal to be positioned, or may be the MME itself.

The MME determines the positioning service request and sends a positioning service request to the positioning server to start the positioning service. Then, the positioning server sends authorization information and auxiliary information required for positioning to the positioning base station $AP_j$, the terminal $UE_1$ to be positioned, and the reference terminal $UE_2$.

The terminal $UE_1$ to be positioned and the reference terminal $UE_2$ respectively transmit an uplink SRS signal to the positioning base station $AP_j$. $UE_1$ transmits a signal at a time instant $t_0$, and $UE_2$ transmits a signal at a time instant $T_0$. $t_j$ denotes the synchronization time error between $UE_1$ and $AP_j$, and $T_j$ denotes the synchronization time error between $UE_2$ and $AP_j$.

The base station $AP_j$ separately receives the positioning signals from $UE_1$ and $UE_2$, and measures the exact arrival time instants. The time instant when $AP_j$ received the signal from $UE_1$ is denoted as $r_j$, and the time instant when $AP_j$ received the signal from $UE_2$ is denoted as $R_j$. $AP_j$ sends information including $r_j$ and $R_j$ to the positioning server, and the positioning server calculates the time difference between the positioning signals from $UE_1$ and $UE_2$ as $Td_j = R_j - r_j$.

The positioning server calculates the coordinates of the terminal $UE_1$ to be positioned according to each $Td_j$ and with the TDOA positioning method, where the distance from $AP_j$ to $UE_1$ is denoted as $L_{1,j}$, and the distance from $AP_j$ to $UE_2$ is denoted as $L_{2,j}$. The specific principles and methods are as follows.

The principle and method for eliminating the synchronization error with the reference terminal $UE_2$ are as follows.

The signal transmitted over the communication network is an electromagnetic wave, and the speed thereof is the light speed. Then, the time instant $R_j$ when $AP_j$ received the signal from $UE_1$ and the time instant $R_j$ when $AP_j$ received the signal from $UE_2$ can be expressed as

$$r_j = t_0 + t_j + \frac{L_{1,j}}{c}, \quad R_j = T_0 + T_j + \frac{L_{2,j}}{c}$$

The time difference of arrival of the signals received by $AP_j$ is

$$Td_j = R_j - r_j = (T_0 + T_j + \frac{L_{2,j}}{c}) - (t_0 + t_j + \frac{L_{1,j}}{c})$$

Consider the relationship between the time differences of arrival of signals received by different $AP_j$ for example, by $AP_1$, the following establishes:

$$Td_j - Td_1 = (T_j - T_1) - (t_j - t_1) + (L_{2,j} - L_{1,j} - L_{2,1} + L_{1,1})/c$$

It can be seen from the meaning of $t_j$ and $T_j$ that, the difference $T_j - T_1$ in synchronization time errors between $AP_j$ and $AP_1$ with respect to $UE_2$ is the synchronization time error between $AP_j$ and $AP_1$. Similarly, the difference $t_j - t_1$ in synchronization time errors between $AP_j$ and $AP_1$ with respect to $UE_1$ is the synchronization time error between $AP_j$ and $AP_1$. That is, both the meanings of $T_j - T_1$ and $t_j - t_1$ is the synchronization time error between $AP_j$ and $AP_1$, so, $(T_j - T_1) - (t_j - t_1) = 0$, or $Td_j - Td_1 = (L_{2,j} - L_{1,j} - L_{2,1} + L_{1,1})/c$. Therefore, by calculating the time differences of arrival $Td_j$ of

the signals of $UE_1$ and $UE_2$ received by $AP_j$, it is sufficient to obtain the distance formula between the terminal and different $AP_j$, and the process does not require time synchronization. Thus, it can eliminate the positioning error caused by un-synchronization in time of the base stations. According to the calculation formula $2[X_{j,1}, Y_{j,1}, Z_{j,1}, r_{j,1}]^*[x, y, z, L_{1,1}]^T = K_j - K_1 - r_{j,1}^2$ of the TDOA method, where, $x, y, z, r_{j,1}$ are unknown variables, $(x, y, z)$ denotes the coordinates of the terminal to be positioned, $L_{1,1}$ denotes the distance to the terminal to be positioned, $X_{j,1} = X_j - X_1$ denotes a coordinate difference on the X axis between $AP_j$ and $AP_1$, $Y_{j,1} = Y_j - Y_1$ denotes a coordinate difference on the $Y$ axis between $AP_j$ and $AP_1$, $Z_{j,1} = Z_j - Z_1$ denotes a coordinate difference on the Z axis between $AP_j$ and $AP_1$, $K_j = X_j^2 + Y_j^2 + Z_j^2$ is the square sum of the coordinates of the positioning base station, $i \geq 2$, $K_1 = X_1^2 + Y_1^2 + Z_1^2$, and $r_{j,1} = L_{1,j} - L_{1,1}$. It can be seen from the above that,

$$r_{j,1} = c * \left( Td_1 - Td_j \right) + L_{2,j} - L_{2,1}$$

Since the distance $L_{2,j}$ from the reference terminal $UE_2$ to each base station is known, the calculation formula according to the TDOA method can be directly solved to obtain $(x, y, z)$.

The positioning server sends the obtained coordinates $(x, y, z)$ of $UE_1$ to the MME, and then the MME sends the same to the entity that initiated the positioning request to complete the positioning.

In the positioning method provided by the embodiment, the positioning server separately receives, from a plurality of positioning base stations, time instant information when positioning reference signals sent by a terminal to be positioned arrive at the positioning base stations and time instant information when positioning reference signals sent by a reference terminal at a fixed location arrive at the positioning base stations, calculates a Time difference of arrival between the terminal to be positioned and the reference terminal at a fixed location according to such time instant information, and in turn, calculates the coordinates of the terminal to be positioned. In this way, it can eliminate the positioning error caused by un-synchronization of the base stations in the TDOA method and can improve the positioning accuracy.

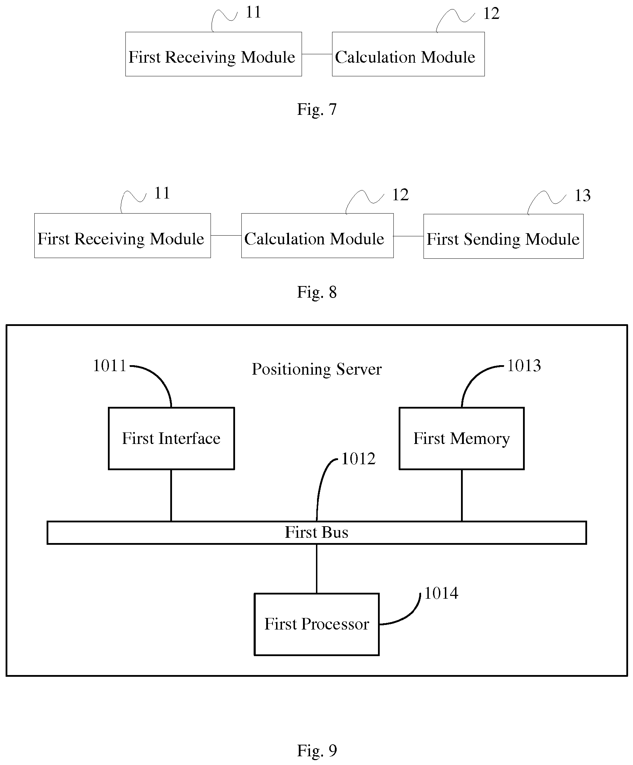

FIG. 7 is a schematic block diagram of a first embodiment of a positioning server according to the present disclosure. As shown in FIG. 7, the positioning server provided in this embodiment includes the following modules.

A first receiving module 11 is configured to respectively receive information including $r_1$ and $R_1$, $r_2$ and $R_2$, ..., $r_N$ and $R_N$ sent by N positioning base stations, where $r_1$, $r_2$... $r_N$ denote time instants when positioning reference signals sent by a terminal to be positioned arrive at the N positioning base stations, $R_1$, $R_2$... $R_N$ denote time instants when positioning reference signals sent by a reference terminal at a fixed location arrive at the N positioning base stations, and N is greater than or equal to 3.

A calculation module 12 is configured to calculate coordinates of the terminal to be positioned according to $r_1$, $r_2$... $r_N$ and $R_1$, $R_2$... $R_N$.

It should be noted that the calculation module 12 is configured to calculate N time differences, $Td_1, Td_2 ... Td_N$ according to $r_1, r_2 ... r_N$ and $R_1, R_2 ... R_N$, where $Td_1 = R_1 - r_1$, $Td_2 = R_2 - r_2 ... Td_N = R_N - r_N$; obtain N-1 distance formulas $r_{j,i} = c * (Td_i - Td_j) + L_{2,j} - L_{2,i}$ between the terminal to be positioned and the positioning base stations according to the formula $Td_j - Td_i = (L_{2,j} - L_{1,j} - L_{2,i} + L_{1,i})/c$, where $r_{j,i} = L_{1,j} - L_{1,i}$, $L_{2,j}$ denotes a distance from the reference terminal at a fixed location to a positioning base station $j$, $L_{2,i}$ denotes a distance from the reference terminal at a fixed location to a positioning base station $i$, $L_{2,j}$ and $L_{2,i}$ are obtained from measurement, $L_{1,j}$ denotes a distance from the terminal to be positioned to a positioning base station $j$, $L_{1,i}$ denotes a distance from the terminal to be positioned to a positioning base station $i$, $c$ denotes a light speed; $i = 1$ or $2...$ or N, $j = 1, 2,..., $ N and $j \neq i$; and calculate coordinates of the terminal to be positioned according to the N-1 distance formulas $r_{j,i} = c*(Td_i - Td_j) + L_{2,j} - L_{2,i}$ and a calculation formula of the Time difference of arrival TDOA method.

Specifically, the calculation module 12 is further configured to calculate the coordinates of the terminal to be positioned by substituting the N-1 distance formulas $r_{j,i} = c*(Td_i - Td_j) + L_{2,j} - L_{1,i}$ into the calculation formula $2[X_{j,i}, Y_{j,i}, Z_{j,i}, r_{j,i}]^*[x, y, z, L_{1,i}]^T = K_j - K_i - r_{j,i}^2$ of the TDOA method, where, $(x, y, z)$ denotes the coordinates of the terminal to be positioned, $X_{j,i}, Y_{j,i}, Z_{j,i}$ denote respectively coordinate differences on axis $X, Y$ and $Z$ between the coordinates $(X_j, Y_j, Z_j)$ of the positioning base station $j$ and the coordinates $(X_i, Y_i, Z_i)$ of the positioning base station $i$; $K_j$ denotes a square sum of the coordinates of the positioning base station $j$, $K_j = X_j^2 + Y_j^2 + Z_j^2$, $K_i$ denotes a square sum of the coordinates of the positioning base station $i$, and $K_i = X_i^2 + Y_i^2 + Z_i^2$.

It should be noted that, for obtaining the $X$ axis coordinate and the $Y$ axis coordinate in the coordinates $(x, y, z)$ of the terminal to be positioned, N is greater than or equal to 4; for obtaining the $X$ axis coordinate, the $Y$ axis coordinate, and the $Z$ axis coordinate in the coordinates $(x, y, z)$ of the terminal to be positioned, N is greater than or equal to 5.

Further, FIG. 8 is a schematic block diagram of a second embodiment of a positioning server according to the present disclosure. As shown in FIG. 8, the positioning server further includes the following modules.

The first receiving module 11 is further configured to receive a positioning service request sent by a MME, where the positioning service request is used to position the terminal to be positioned.

A first sending module 13 is configured to send first authorization information and first auxiliary information to the N positioning base stations, send second authorization information and second auxiliary information to the terminal to be positioned, and send third authorization information and third auxiliary information to the reference terminal at a fixed location, where the first, second, and third authorization information are used to notify the N positioning base stations, the terminal to be positioned, and the reference terminal at a fixed location to start positioning, the first auxiliary information is used to identify the terminal to be positioned and the reference terminal at a fixed location, the second and third auxiliary information are used to identify N positioning base stations, and N is greater than or equal to 3.

It should be noted that, before starting the positioning, the N positioning base stations, the terminal to be positioned, and the reference terminal that are involved in the positioning have to know about the object to communicate with, so the first, second, and third auxiliary information respectively identify the communication objects for the N positioning base stations, the terminal to be positioned, and the reference terminal at a fixed location. In addition, the first auxiliary information further includes information indicating how the positioning base station handles an abnormal situation, the second auxiliary information further includes information indicating how the terminal to be positioned handles an abnormal situation, and the third auxiliary information further includes information indicating how the reference terminal handles an abnormal condition.

The positioning server provided in this embodiment may be configured to perform the technical solutions of the first embodiment, the second embodiment, and the third embodiment of the method. The implementation principle and technical effects are similar, details of which will not be repeated herein.

In practical application, the first receiving module 11, the calculation module 12, and the first sending module 13 may each be implemented by a Central Processing Unit (CPU) or a Micro Processor Unit (MPU), a Digital Signal Processor (DSP) or a Field Programmable Gate Array (FPGA) located in the positioning server.

FIG. 9 is a schematic block diagram of a second embodiment of a positioning server according to the present disclosure. As shown in FIG. 9, the positioning server provided in this embodiment includes: a first interface 1011, a first bus 1012, a first memory 1013, and a first processor 1014. The first interface 1011, the first memory 1013, and the first processor 1014 are connected by the first bus 1012. The first memory 1013 is configured to store instructions, and the first processor 1014 reads instructions configured to:

receive information including $r_1$ and $R_1$, $r_2$ and $R_2$, ..., $r_N$ and $R_N$ sent by N positioning base stations, where $r_1, r_2...$ $r_N$ denote time instants when positioning reference signals sent by a terminal to be positioned arrive at the N positioning base stations, $R_1, R_2... R_N$ denote time instants when positioning reference signals sent by a reference terminal at a fixed location arrive at the N positioning base stations, and N is greater than or equal to 3; and calculate coordinates of the terminal to be positioned according to $r_1, r_2... r_N$ and $R_1, R_2 ... R_N$.

Further, the first processor 1014 reads instructions further configured to:

calculate N time differences, $Td_1, Td_2 ... Td_N$ according to $r_1, r_2 ... r_N$ and $R_1, R_2 ... R_N$, where $Td_1 = R_1 - r_1$, $Td_2 = R_2 - r_2 ... Td_N = R_N - r_N$ ;
obtain N-1 distance formulas $r_{j,i} = c^*(Td_i - Td_j) + L_{2,j} - L_{2,i}$ between the terminal to be positioned and the positioning base stations according to the formula $Td_j - Td_i = (L_{2,j} - L_{1,j} - L_{2,i} + L_{1,i})/c$, where $r_{j,i} = L_{2,j} - L_{1,i}$ , $L_{2,j}$ denotes a distance from the reference terminal at a fixed location to a positioning base station $j$, $L_{2,i}$ denotes a distance from the reference terminal at a fixed location to a positioning base station $i$, $L_{2,j}$ and $L_{2,i}$ are obtained from measurement, $L_{1,j}$ denotes a distance from the terminal to be positioned to a positioning base station $j$, $L_{1,i}$ denotes a distance from the terminal to be positioned to a positioning base station $i$, $c$ denotes a light speed; $i$ = 1 or 2... or N, $j$ = 1, 2,..., N and $j \neq i$; and
calculate coordinates of the terminal to be positioned according to the N-1 distance formulas $r_{j,i} = c^*(Td_i - Td_j) + L_{2,j} - L_{2,i}$ and a calculation formula of the TDOA method.

Further, the first processor 1014 reads instructions further configured to:
calculate the coordinates of the terminal to be positioned by substituting the N-1 distance formulas $r_{j,i} = c^*(Td_i - Td_j) + L_{2,j} - L_{2,i}$ into the calculation formula $2[X_{j,i}, Y_{j,i}, Z_{j,i}, r_{j,i}]^*[x, y, z, L_{1,i}]^T = K_j - K_i - r_{j,i}^2$ of the TDOA method, where, $(x, y, z)$ denotes the coordinates of the terminal to be positioned, $X_{j,i}, Y_{j,i}, Z_{j,i}$ denote respectively coordinate differences on axis $X, Y$ and $Z$ between the coordinates $(X_j, Y_j, Z_j)$ of the positioning base station $j$ and the coordinates $(X_i, Y_i, Z_i)$ of the positioning base station $i$ ; $K_j$ denotes a square sum of the coordinates of the positioning base station $j$, $K_j = X_j^2 + Y_j^2 + Z_j^2$, $K_i$ denotes a square sum of the coordinates of the positioning base station $i$, and $K_i = X_i^2 + Y_i^2 + Z_i^2$. It should be noted that, for obtaining the $X$ axis coordinate and the $Y$ axis coordinate in the coordinates $(x, y, z)$ of the terminal to be positioned, N is greater than or equal to 4; for obtaining the $X$ axis coordinate, the $Y$ axis coordinate, and the $Z$ axis coordinate in the coordinates $(x, y, z)$ of the terminal to be positioned, N is greater than or equal to 5.

Further, the first processor 1014 reads instructions further configured to:

receive a positioning service request sent by a MME, where the positioning service request is used to position the terminal to be positioned; send first authorization information and first auxiliary information to the N positioning base stations, send second authorization information and second auxiliary information to the terminal to be positioned, and send third authorization information and third auxiliary information to the reference terminal at a fixed location, where the first, second, and third authorization information are used to notify the N positioning base stations, the terminal to be positioned, and the reference terminal at a fixed location to start positioning, the first auxiliary information is used to identify the terminal to be positioned and the reference terminal at a fixed location, and the second and third auxiliary information are used to identify N positioning base stations.

The positioning server provided in this embodiment may be configured to perform the technical solutions of the first embodiment, the second embodiment, and the third embodiment of the method. The implementation principle and technical effects are similar, details of which will not be repeated herein.

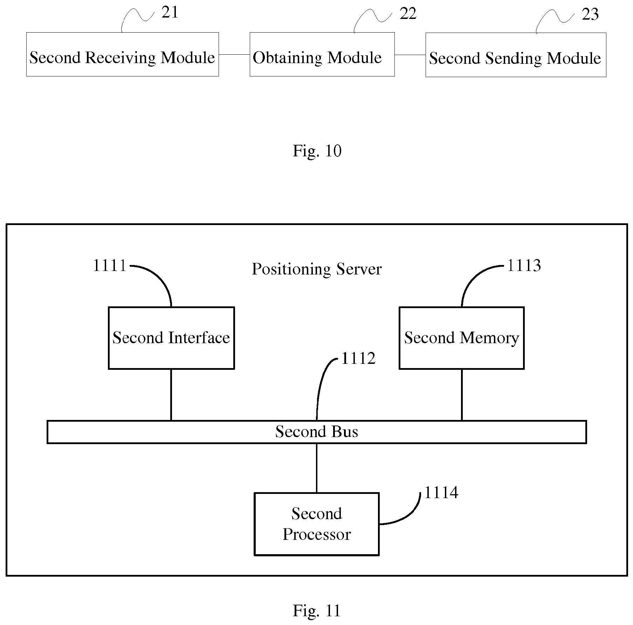

FIG. 10 is a schematic block diagram of a first embodiment of a positioning base station according to the present disclosure. As shown in FIG. 10, the positioning base station provided in this embodiment includes the following modules.

A second receiving module 21 is configured to receive positioning reference signals sent by the terminal to be positioned and the reference terminal at a fixed location.

It should be noted that, in the specific implementation, before the positioning base station receives the positioning reference signals sent by the terminal to be positioned and the reference terminal at a fixed location, the positioning base station allocates a positioning reference signal resource to the terminal to be positioned and the reference terminal. At starting or ending of the positioning, the positioning base station sends a reconfiguration message to the terminal to be positioned and the reference terminal, and the reconfiguration message is used to notify the terminal to be positioned and the reference terminal to modify the previously configured positioning reference signals.

It should also be noted that the positioning reference signal is an uplink reference signal. An obtaining module 22 is configured to obtain a time instant $r_i$ when the positioning reference signal sent by the terminal to be positioned arrives at the positioning base station, and a time instant $R_i$ when the positioning reference signal sent by the reference terminal at a fixed location arrives at the positioning base station, where, $i$ = 1 or 2... or N, and N is greater than or equal to 3.

It should be noted that the positioning base station may obtain a time instant $r_i$ when the positioning reference signal sent by the terminal to be positioned arrives at the positioning base station, and a time instant $R_i$ when the positioning reference signal sent by the reference terminal at a fixed location arrives at the positioning base station by parsing the received positioning reference signals.

A second sending module 23 is configured to send the information including $r_i$ and $R_i$ to the positioning server, so that the positioning server calculates the coordinates of the terminal to be positioned according to $r_i$ and $R_i$.

Further, the second sending module 23 is further configured to send a positioning service request to the MME, where the positioning service request is used to position the terminal to be positioned.

The second receiving module 21 is further configured to receive first authorization information and first auxiliary information sent by the positioning server, where the first authorization information is used to notify the positioning base station to start positioning, and the first auxiliary information is used to identify the terminal to be positioned and the reference terminal at a fixed location.

The positioning base station provided by this embodiment may be configured to perform the technical solutions of the above fourth method embodiment and the fifth method embodiment. The implementation principle and technical effects are similar, details of which will not be repeated herein.

In practical application, the second receiving module 21, the obtaining module 22, and the second sending module 23 can all be implemented by a CPU, an MPU, a DSP, an FPGA, or the like located in the positioning base station.

FIG. 11 is a schematic block diagram of a second embodiment of a positioning base station according to the present disclosure. As shown in FIG. 11, the positioning base station provided in this embodiment includes: a second interface 1111, a second bus 1112, a second memory 1113 and a second processor 1114. The second interface 1111, the second memory 1113, and the second processor 1114 are connected by the second bus 1112. The second memory 1113 is configured to store instructions, and the second processor 1114 reads instructions configured to:

receive positioning reference signals sent by the terminal to be positioned and the reference terminal at a fixed location;
wherein it should be noted that the positioning reference signal is an uplink reference signal; and
obtain a time instant $r_i$ when the positioning reference signal sent by the terminal to be positioned arrives at the positioning base station, and a time instant $R_i$ when the positioning reference signal sent by the reference terminal at a fixed location arrives at the positioning base station, where, $i$ = 1 or 2... or N, and N is greater than or equal to 3; and
send the information including $r_i$ and $R_i$ to the positioning server.

Further, the second processor 1114 reads instructions configured to:
send a positioning service request to the MME, where the positioning service request is used to position the terminal to be positioned; receive first authorization information and first auxiliary information sent by the positioning server, where the first authorization information is used to notify the positioning base station to start positioning, and the first auxiliary information is used to identify the terminal to be positioned and the reference terminal at a fixed location. In addition, the first auxiliary information further includes information indicating how the positioning base station handles an abnormal situation.

The positioning base station provided by this embodiment may be configured to perform the technical solutions of the above fourth method embodiment and the fifth method embodiment. The implementation principle and technical effects are similar, details of which will not be repeated herein.

The present disclosure further provides a positioning system, which includes the positioning server described in the first embodiment of the positioning server or the second embodiment of the positioning server, the positioning base station described in the first embodiment of the positioning base station, and the reference terminal at a fixed location, the terminal to be positioned, and the MME. The terminal to be positioned is configured to send a positioning service request to the MME, and send a positioning reference signal to the positioning base station, and is further configured to receive the coordinates of the terminal to be positioned sent by the MME, where the positioning service request is used to position the terminal to be positioned. The reference terminal at a fixed location is configured to send a positioning reference signal to the positioning base station. The MME is configured to receive the positioning service request sent by the terminal to be positioned or the positioning base station, determine the positioning service request, and send the positioning service request to the positioning server; and further configured to receive the coordinates of the terminal to be positioned sent by the positioning server, and send the coordinates of the terminal to be positioned to the terminal to be positioned or the positioning base station requesting the positioning service, where the positioning service is used to position the terminal to be positioned.

It should be noted that the MME is generally on the core network side, and plays a role of collecting and forwarding information between the requesting party (including the terminal to be positioned, the positioning base station, and the MME itself) and the responding party (the positioning server).

Further, the terminal to be positioned is further configured to receive second authorization information and second auxiliary information that are sent by the positioning server, where the second authorization information is used to notify the terminal to be positioned to start positioning, and the second auxiliary information is used to identify the N positioning base stations. In addition, the second auxiliary information further includes information indicating how the terminal to be positioned handles an abnormal situation.

It should be noted that, before the terminal to be positioned sends the positioning reference signal to the positioning base station, the terminal to be positioned accepts the positioning reference signal resource allocated by the positioning base station. At starting or ending of the positioning, the terminal to be positioned receives the reconfiguration message sent by the positioning base station. The reconfiguration message is used to notify the terminal to be positioned to modify the previously configured positioning reference signals.

The reference terminal at a fixed location is further configured to receive third authorization information and third auxiliary information that are sent by the positioning server, where the third authorization information is used to notify the reference terminal at a fixed location to start positioning, and the third auxiliary information is used to identify the N positioning base stations. The third auxiliary information further includes information indicating how the reference terminal handles an abnormal condition.

It should be noted that, before the reference terminal at a fixed location sends the positioning reference signal to the positioning base station, the terminal to be positioned accepts the positioning reference signal resource allocated by the positioning base station. At starting or ending of the positioning, the reference terminal at a fixed location receives the reconfiguration message sent by the positioning base station. The reconfiguration message is used to notify the reference terminal at a fixed location to modify the previously configured positioning reference signals.

The positioning system provided in this embodiment combines the reference signal sent by a reference terminal at a known location with the reference signal sent by the terminal to be positioned, and uses the time difference relationship between the signals of the reference terminal and the terminal to be positioned to eliminate the error caused by un-synchronization in time between the base stations. It not only can eliminate the error introduced in the TDOA calculation process, so that the error only comes from the arrival time of the measurement reference signal, thereby greatly improving the positioning accuracy.

The present disclosure further provides a positioning system, which includes the positioning server described in the third embodiment of the positioning server, the positioning base station described in the second embodiment of the positioning base station, and the reference terminal at a fixed location, the terminal to be positioned, and the MME. The terminal to be positioned is configured to send a positioning service request to the MME, and send a positioning reference signal to the positioning base station, and is further configured to receive the coordinates of the terminal to be positioned sent by the MME, where the positioning service request is used to position the terminal to be positioned. The reference terminal at a fixed location is configured to send a positioning reference signal to the positioning base station. The MME is configured to receive the positioning service request sent by the terminal to be positioned or the positioning base station, determine the positioning service request, and send the positioning service request to the positioning server; and further configured to receive the coordinates of the terminal to be positioned sent by the positioning server, and send the coordinates of the terminal to be positioned to the terminal to be positioned or the positioning base station requesting the positioning service, where the positioning service is used to position the terminal to be positioned.

It should be noted that the MME is generally on the core network side, and plays a role of collecting and forwarding information between the requesting party (including the terminal to be positioned, the positioning base station, and the MME itself) and the responding party (the positioning server).

Further, the terminal to be positioned is further configured to receive second authorization information and second auxiliary information that are sent by the positioning server, where the second authorization information is used to notify the terminal to be positioned to start positioning, and the second auxiliary information is used to identify the N positioning base stations. In addition, the second auxiliary information further includes information indicating how the terminal to be positioned handles an abnormal situation.

It should be noted that, before the terminal to be positioned sends the positioning reference signal to the positioning base station, the terminal to be positioned accepts the positioning reference signal resource allocated by the positioning base station. At starting or ending of the positioning, the terminal to be positioned receives the reconfiguration message sent by the positioning base station. The reconfiguration message is used to notify the terminal to be positioned to modify the previously configured positioning reference signals.

The reference terminal at a fixed location is further configured to receive third authorization information and third auxiliary information that are sent by the positioning server, where the third authorization information is used to notify the reference terminal at a fixed location to start positioning, and the third auxiliary information is used to identify the N positioning base stations. The third auxiliary information further includes information indicating how the reference terminal handles an abnormal condition.

It should be noted that, before the reference terminal at a fixed location sends the positioning reference signal to the positioning base station, the terminal to be positioned accepts the positioning reference signal resource allocated by the positioning base station. At starting or ending of the positioning, the reference terminal at a fixed location receives the reconfiguration message sent by the positioning base station. The reconfiguration message is used to notify the reference terminal at a fixed location to modify the previously configured positioning reference signals.

The positioning system provided in this embodiment combines the reference signal sent by a reference terminal at a known location with the reference signal sent by the terminal to be positioned, and uses the time difference relationship between the signals of the reference terminal and the terminal to be positioned to eliminate the error caused by un-synchronization in time between the base stations. It not only can eliminate the error introduced in the TDOA calculation process, so that the error only comes from the arrival time of the measurement reference signal, thereby greatly improving the positioning accuracy.

An embodiment of the present disclosure also provides a storage medium. Optionally, in the embodiment, the foregoing storage medium may be configured to store program codes for performing the following steps.

At S13, a positioning server separately receives information including $r_1$ and $R_1$, $r_2$ and $R_2$, ..., $r_N$ and $R_N$ sent by N positioning base stations, where $r_1$, $r_2$... $r_N$ denote time instants when positioning reference signals sent by a terminal to be positioned arrive at the N positioning base stations, $R_1$, $R_2$... $R_N$ denote time instants when positioning reference signals sent by a reference terminal at a fixed location arrive at the N positioning base stations, and N is greater than or equal to 3.

At S14, the positioning server calculates coordinates of the terminal to be positioned according to $r_1$, $r_2$... $r_N$ and $R_1$, $R_2$... $R_N$.

Further, the above storage medium may be configured to store program codes for performing the following steps.

At S141, the positioning server calculates N time differences, $Td_1$, $Td_2$ ... $Td_N$ according to $r_1$ , $r_2$ ... $r_N$ and $R_1$ , $R_2$ ... $R_N$ , where $Td_1 = R_1 - r_1$, $Td_2 = R_2 - r_2$ ... $Td_N = R_N - r_N$.

S142, the positioning server obtains N-1 distance formulas $r_{j,i} = c*(Td_i - Td_j) + L_{2,j} - L_{1,i}$ between the terminal to be positioned and the positioning base stations according to the formula $Td_j - Td_i = (L_{2,j} - L_{1,j} - L_{2,i} + L_{1,i})/c$, where $r_{j,i} = L_{1,j} - L_{1,i}$ , $L_{2,j}$ denotes a distance from the reference terminal at a fixed location to a positioning base station $j$, $L_{2,i}$ denotes a distance from the reference terminal at a fixed location to a positioning base station $i$, $L_{2,j}$ and $L_{2,i}$ are obtained from measurement, $L_{1,j}$ denotes a distance from the terminal to be positioned to a positioning base station $j$, $L_{1,i}$ denotes a distance from the terminal to be positioned to a positioning base station $i$, $c$ denotes a light speed; $i$ = 1 or 2... or N, $j$ = 1, 2,..., N and $j \neq i$.

At S143, the positioning server calculates coordinates of the terminal to be positioned according to the N-1 distance formulas $r_{j,i} = c*(Td_i - Td_j) + L_{2,j} - L_{2,i}$ and a calculation formula of the TDOA method.

Further, the above storage medium may be further configured to store program codes for performing the following steps.

The positioning server calculates the coordinates of the terminal to be positioned by substituting the N-1 distance formulas $r_{j,i} = c*(Td_i - Td_j) + L_{2,j} - L_{2,i}$ into the calculation formula $2[X_{j,i}, Y_{j,i}, Z_{j,i}, r_{j,i}]*[x, y, z, L_{1,i}]^T = K_j - K_i - r_{j,i}^2$ of the TDOA

method, where, $(x, y, z)$ denotes the coordinates of the terminal to be positioned, $X_{j,i}$, $Y_{j,i}$, $Z_{j,i}$ denote respectively coordinate differences on axis $X$, $Y$ and $Z$ between the coordinates $(X_j, Y_j, Z_j)$ of the positioning base station $j$ and the coordinates $(X_i, Y_i, Z_i)$ of the positioning base station $i$ ; $K_j$ denotes a square sum of the coordinates of the positioning base station $j$ , $K_j = X_j^2 + Y_j^2 + Z_j^2$ , $K_i$ denotes a square sum of the coordinates of the positioning base station $i$ , and $K_i = X_i^2 + Y_i^2 + Z_i^2$.

It should be noted that, for obtaining the $X$ axis coordinate and the $Y$ axis coordinate in the coordinates $(x, y, z)$ of the terminal to be positioned, N is greater than or equal to 4; for obtaining the $X$ axis coordinate, the $Y$ axis coordinate, and the $Z$ axis coordinate in the coordinates $(x, y, z)$ of the terminal to be positioned, N is greater than or equal to 5.

Further, the above storage medium may be further configured to store program codes for performing the following steps.

At S11, the positioning server receives the positioning service request sent by the MME, where the positioning service request is used to position the terminal to be positioned.

At S12, the positioning server sends first authorization information and first auxiliary information to the N positioning base stations, sends second authorization information and second auxiliary information to the terminal to be positioned, and sends third authorization information and third auxiliary information to the reference terminal at a fixed location, where the first, second, and third authorization information are used to notify the N positioning base stations, the terminal to be positioned, and the reference terminal at a fixed location to start positioning, the first auxiliary information is used to identify the terminal to be positioned and the reference terminal at a fixed location, and the second and third auxiliary information are used to identify N positioning base stations.

It should be noted that the first auxiliary information further includes information indicating how the positioning base station handles an abnormal situation, the second auxiliary information further includes information indicating how the terminal to be positioned handles an abnormal situation, and the third auxiliary information further includes information indicating how the reference terminal handles an abnormal condition.

Optionally, in this embodiment, the above storage medium may include, but is not limited to, a variety of media that can store codes of a program such as a USB flash drive, a Read-Only Memory (ROM), a Random Access Memory (RAM), and a mobile hard disk, a magnetic disk, or an optical disk.

An embodiment of the present disclosure also provides a storage medium. Optionally, in the embodiment, the above storage medium may be configured to store program codes for performing the following steps.

At S23, a positioning base station receives positioning reference signals sent by the terminal to be positioned and the reference terminal at a fixed location.

At S24, the positioning base station obtains a time instant $r_i$ when the positioning reference signal sent by the terminal to be positioned arrives at the positioning base station, and a time instant $R_i$ when the positioning reference signal sent by the reference terminal at a fixed location arrives at the positioning base station, where, $i$ = 1 or 2... or N, and N is greater than or equal to 3.

At S25, the positioning base station sends the information including $r_i$ and $R_i$ to the positioning server, so that the positioning server calculates the coordinates of the terminal to be positioned according to $r_i$ and $R_i$.

It should be noted that the positioning reference signal is an uplink reference signal.

It should also be noted that the above storage medium may also be configured to store program codes for performing the following steps.

Before the positioning base station receives the positioning reference signals sent by the terminal to be positioned and the reference terminal at a fixed location, the positioning base station allocates a positioning reference signal resource to the terminal to be positioned and the reference terminal. At starting or ending of the positioning, the positioning base station sends a reconfiguration message to the terminal to be positioned and the reference terminal, and the reconfiguration message is used to notify the terminal to be positioned and the reference terminal to modify the previously configured positioning reference signals.

Further, the above storage medium may be further configured to store program codes for performing the following steps.

At S21, the positioning base station sends a positioning service request to the MME, where the positioning service request is used to position the terminal to be positioned.

At S22, the positioning base station receives first authorization information and first auxiliary information sent by the positioning server. The first authorization information is used to notify the positioning base station to start positioning, and the first auxiliary information is used to identify the terminal to be positioned and the reference terminal at a fixed location.

Optionally, in this embodiment, the above storage medium may include, but is not limited to, a variety of media that can store codes of a program such as a U disck, a ROM, a RAM, and a mobile hard disk, a magnetic disk, or an optical disk.

Those skilled in the art will appreciate that embodiments of the present disclosure can be provided as a method, a system, or a computer program product. Accordingly, the present disclosure may take the form of a hardware embodiment, a software embodiment, or a combination of software and hardware aspects. Moreover, the present disclosure may take the form of a computer program product embodied on one or more computer-usable storage media (including but not limited to disk storage and optical storage, etc.) including computer usable program codes.

The present disclosure is described with reference to flowcharts and/or block diagrams of methods, devices (systems), and computer program products according to embodiments of the present disclosure. It will be understood that each step and/or block of the flowchart and/or block diagram, or combination of steps and/or blocks of the flowchart and/or block diagram can be implemented in computer program instructions. Such computer program instructions can be provided to a processor of a general purpose computer, a special purpose computer, an embedded processor, or other programmable data processing device to produce a machine, such that instructions executed by a processor of a computer or other programmable data processing device to generate means for implementing the functions specified in one or more steps of a flowchart or in one or more blocks of a block diagram.

Such computer program instructions can also be stored in a computer readable memory that can direct a computer or other programmable data processing device to operate in a particular manner, such that the instructions stored in the computer readable memory produce an article of manufacture including an instruction device that implements the functions specified in one or more steps of a flowchart or in one or more blocks of a block diagram.

Such computer program instructions can also be loaded onto a computer or other programmable data processing device such that a series of operational steps are performed on a computer or other programmable device to produce computer-implemented processing, such that instructions executed on a computer or other programmable device provides steps for implementing the functions specified in one or more steps of a flowchart or in one or more blocks of a block diagram.

The above description is only for the preferred embodiments of the present disclosure, and is not intended to limit the scope of the disclosure.

**Claims**

1. A positioning method, comprising:

sending, by a terminal to be positioned, a positioning service request to an MME, and a positioning reference signal to N positioning base stations, wherein the positioning service request is used to position the terminal to be positioned, and N is greater than or equal to 3;
sending, by a reference terminal at a fixed location, a positioning reference signal to the N positioning base stations;
receiving, by the MME, the positioning service request sent by the terminal to be positioned, determining, by the MME, the positioning service request, and sending, by the MME, the positioning service request to a positioning server;
separately receiving (101), by the positioning server, information comprising $r_1$ and $R_1$, $r_2$ and $R_2$, ..., $r_N$ and $R_N$ sent by the N positioning base stations, where $r_1, r_2 ... r_N$ denote time instants when positioning reference signals sent by the terminal to be positioned arrive at the N positioning base stations, $R_1, R_2 ... R_N$ denote time instants when positioning reference signals sent by the reference terminal at the fixed location arrive at the N positioning base stations;
calculating (102), by the positioning server, coordinates of the terminal to be positioned according to $r_1, r_2 ... r_N$ and $R_1, R_2 ... R_N$,
wherein before separately receiving, by the positioning server, information comprising $r_1$ and $R_1$, $r_2$ and $R_2$, ..., $r_N$ and $R_N$ sent by the N positioning base stations, the method further comprises: sending (302), by the positioning server, first authorization information and first auxiliary information to the N positioning base stations, wherein the first authorization information is used to notify the N positioning base stations to start positioning and the first auxiliary information is used to identify the terminal to be positioned and the reference terminal at a fixed location;
receiving, by the MME, the coordinates of the terminal to be positioned sent by the positioning server;
sending, by the MME, the coordinates of the terminal to be positioned to the terminal to be positioned requesting the positioning service, where the positioning service is used to position the terminal to be positioned.

2. The method according to claim 1, wherein calculating, by the positioning server, coordinates of the terminal to be positioned according to $r_1, r_2 ... r_N$ and $R_1, R_2 ... R_N$, comprises:

calculating (202), by the positioning server, N time differences, $Td_1, Td_2 ... Td_N$ according to $r_1, r_2 ... r_N$ and $R_1, R_2 ... R_N$, where $Td_1 = R_1 - r_1$, $Td_2 = R_2 - r_2 ... Td_N = R_N - r_N$;
obtaining (203), by the positioning server, N-1 distance formulas $r_{j,i} = c * (Td_i - Td_j) + L_{2,j} - L_{2,i}$ between the terminal to be positioned and the positioning base stations according to the formula $Td_j - Td_i = (L_{2,j} - L_{2,j} - L_{2,i} + L_{1,i})/c$, where $r_{j,i} = L_{1,j} - L_{1,i}$, $L_{2,j}$ denotes a distance from the reference terminal at a fixed location to a positioning base station $j$, $L_{2,i}$ denotes a distance from the reference terminal at a fixed location to a positioning base station $i$, $L_{2,j}$ and $L_{2,i}$ are obtained from measurement, $L_{1,j}$ denotes a distance from the terminal to be positioned to a positioning base station $j$, $L_{1,i}$ denotes a distance from the terminal to be positioned to a positioning base station $i$, $c$ denotes a light speed; $i$ = 1 or 2... or N, $j$ = 1, 2,..., N and $j \neq i$; and
calculating (204), by the positioning server, coordinates of the terminal to be positioned according to the N-1 distance formulas $r_{j,i} = c * (Td_i - Td_j) + L_{2,j} - L_{2,i}$ and a calculation formula of a Time Difference of Arrival TDOA method.

3. The method according to claim 2, wherein calculating, by the positioning server, coordinates of the terminal to be positioned according to the N-1 distance formulas $r_{j,i} = c * (Td_i - Td_j) + L_{2,j} - L_{2,i}$ and a calculation formula of a Time Difference of Arrival TDOA method, comprises:

   calculating, by the positioning server, the coordinates of the terminal to be positioned by substituting the N-1 distance formulas $r_{j,i} = c * (Td_i - Td_j) + L_{2,j} - L_{2,i}$ into the calculation formula $2[X_{j,i}, Y_{j,i}, Z_{j,i}, r_{j,i}]*[x, y, z, L_{1,i}]^T = K_j - K_i - r_{j,i}^2$ of the TDOA method, where, $(x, y, z)$ denotes the coordinates of the terminal to be positioned, $X_{j,i}, Y_{j,i}, Z_{j,i}$ denote respectively coordinate differences on axis $X$, $Y$ and $Z$ between coordinates $(X_j, Y_j, Z_j)$ of the positioning base station $j$ and coordinates $(X_i, K_i, Z_i)$ of the positioning base station $i$; $K_j$ denotes a square sum of the coordinates of the positioning base station $j$, $K_j = X_j^2 + Y_j^2 + Z_j^2$, $K_i$ denotes a square sum of the coordinates of the positioning base station $i$, and $K_i = X_i^2 + Y_i^2 + Z_i^2$;
   wherein for obtaining the $X$ axis coordinate and the $Y$ axis coordinate in the coordinates $(x, y, z)$ of the terminal to be positioned, N is greater than or equal to 4; for obtaining the $X$ axis coordinate, the $Y$ axis coordinate, and the $Z$ axis coordinate in the coordinates $(x, y, z)$ of the terminal to be positioned, N is greater than or equal to 5; and/or
   wherein before separately receiving, by a positioning server, information comprising $r_1$ and $R_1$, $r_2$ and $R_2$, ..., $r_N$ and $R_N$ sent by N positioning base stations, the method further comprises:

      receiving (301), by the positioning server, a positioning service request sent by a Mobility Management Entity MME, where the positioning service request is used to position the terminal to be positioned; and
      sending (302), by the positioning server, second authorization information and second auxiliary information to the terminal to be positioned, and sending third authorization information and third auxiliary information to the reference terminal at a fixed location, where the second, and third authorization information are used to notify the terminal to be positioned, and the reference terminal at a fixed location to start positioning, and the second and third auxiliary information are used to identify N positioning base stations.

4. A positioning system, comprising a positioning server, N positioning base stations, a reference terminal at a fixed location, a terminal to be positioned, and a mobility Managing entity MME, where N is greater than or equal to 3;
   wherein the terminal to be positioned is configured to send a positioning service request to the MME, and send a positioning reference signal to the N positioning base stations, and is further configured to receive the coordinates of the terminal to be positioned sent by the MME, where the positioning service request is used to position the terminal to be positioned;
   the reference terminal at a fixed location is configured to send a positioning reference signal to the positioning base station; and
   the MME is configured to receive the positioning service request sent by the terminal to be positioned, determine the positioning service request, and send the positioning service request to the positioning server; and further configured to receive the coordinates of the terminal to be positioned sent by the positioning server, and send the coordinates of the terminal to be positioned to the terminal to be positioned requesting the positioning service, where the positioning service is used to position the terminal to be positioned;
   the positioning server is configured to separately receive information comprising $r_1$ and $R_1$, $r_2$ and $R_2$, ..., $r_N$ and $R_N$ sent by the N positioning base stations, where $r_1, r_2 ... r_N$ denote time instants when positioning reference signals sent by the terminal to be positioned arrive at the N positioning base stations, $R_1, R_2 ... R_N$ denote time instants when positioning reference signals sent by the reference terminal at the fixed location arrive at the N positioning base stations; and calculate the coordinates of the terminal to be positioned according to $r_1, r_2 ... r_N$ and $R_1, R_2 ... R_N$;
   wherein before separately receiving, by the positioning server, information comprising $r_1$ and $R_1$, $r_2$ and $R_2$, ..., $r_N$ and $R_N$ sent by the N positioning base stations, the positioning server is further configured to: send first authorization information and first auxiliary information to the N positioning base stations, wherein the first authorization information is used to notify the N positioning base stations to start positioning and the first auxiliary information is used to identify the terminal to be positioned and the reference terminal at a fixed location.

**Patentansprüche**

1. Positionierungsverfahren, das umfasst:

Senden durch ein zu positionierendes Endgerät einer Positionierungsdienstanforderung an eine MME und eines Positionierungsreferenzsignals an N Positionierungsbasisstationen, wobei die Positionierungsdienstanforderung verwendet wird, um das zu positionierende Endgerät zu positionieren, und N größer oder gleich 3 ist;
Senden durch ein Referenzendgerät an einem festen Ort eines Positionierungsreferenzsignals an die N Positionierungsbasisstationen;
Empfangen durch die MME der Positionierungsdienstanforderung, die von dem zu positionierenden Endgerät gesendet wird, Ermitteln durch die MME der Positionierungsdienstanforderung und Senden durch die MME der Positionierungsdienstanforderung an einen Positionierungsserver;
getrenntes Empfangen (101) durch den Positionierungsserver von Informationen, die $r_1$ und $R_1$, $r_2$ und $R_2$, ..., $r_N$ und $R_N$ umfassen, die von den N Positionierungsbasisstationen gesendet werden, wobei $r_1$, $r_2$ ... $r_N$ Zeitpunkte bezeichnen, zu denen Positionierungsreferenzsignale, die von dem zu positionierenden Endgerät gesendet werden, bei den N Positionierungsbasisstationen eintreffen, wobei $R_1$, $R_2$ ... $R_N$ Zeitpunkte bezeichnen, zu denen Positionierungsreferenzsignale, die von dem Referenzendgerät gesendet werden, an dem festen Ort bei den N Positionierungsbasisstationen eintreffen;
Berechnen (102) durch den Positionierungsserver von Koordinaten des zu positionierenden Endgeräts gemäß $r_1$, $r_2$ ... $r_N$ und $R_1$, $R_2$ ... $R_N$,
wobei vor dem getrennten Empfangen durch den Positionierungsserver von Informationen, die $r_1$ und $R_1$, $r_2$ und $R_2$, ..., $r_N$ und $R_N$ umfassen, die von den N Positionierungsbasisstationen gesendet werden, das Verfahren ferner umfasst: Senden (302) durch den Positionierungsserver erster Genehmigungsinformationen und erster Hilfsinformationen an die N Positionierungsbasisstationen, wobei die ersten Genehmigungsinformationen verwendet werden, um die N Positionierungsbasisstationen zu benachrichtigen, das Positionieren zu starten, und die ersten Hilfsinformationen verwendet werden, um das zu positionierende Endgerät und das Referenzendgerät an einem festen Ort zu identifizieren;
Empfangen durch die MME der Koordinaten des Endgeräts, das von dem Positionierungsserver zu positionieren ist;
Senden durch die MME der Koordinaten des zu positionierenden Endgeräts an das zu positionierende Endgerät, das den Positionierungsdienst anfordert, wobei der Positionierungsdienst verwendet wird, um das zu positionierende Endgerät zu positionieren.

2. Verfahren nach Anspruch 1, wobei das Berechnen durch den Positionierungsserver von Koordinaten des zu positionierenden Endgeräts gemäß $r_1$, $r_2$ ... $r_N$ und $R_1$, $R_2$ ... $R_N$ umfasst:

Berechnen (202) durch den Positionierungsserver von N Zeitunterschieden $Td_1$, $Td_2$... $Td_N$ gemäß $r_1$, $r_2$ ... $r_N$ und $R_1$, $R_2$ ... $R_N$, wobei $Td_1 = R_1 - r_1$, $Td_2 = R_2 - r_2$... $Td_N = R_N - r_N$;
Erhalten (203) durch den Positionierungsserver von N-1 Entfernungsformeln $r_{j,i} = c^*(Td_i - Td_j) + L_{2,j} - L_{2,i}$ zwischen dem zu positionierenden Endgerät und den Positionierungsbasisstationen gemäß der Formel $Td_j - Td_i = (L_{2,j} - L_{1,j} - L_{2,i} - L_{1,i})/c$, wobei $r_{j,i} = L_{1,j} - L_{1,i}$, $L_{2,j}$ eine Entfernung von dem Referenzendgerät an einem festen Ort zu einer Positionierungsbasisstation $j$ bezeichnet, $L_{2,i}$ eine Entfernung von dem Referenzendgerät an einem festen Ort zu einer Positionierungsbasisstation $i$, $L_{2,j}$ bezeichnet, und $L_{2,i}$ aus einer Messung erhalten werden, $L_{1,j}$ eine Entfernung von dem zu positionierenden Endgerät zu einer Positionierungsbasisstation j bezeichnet, $L_{1,i}$ eine Entfernung von dem zu positionierenden Endgerät zu einer Positionierungsbasisstation $i$ bezeichnet, $c$ eine Lichtgeschwindigkeit bezeichnet; $i$ = 1 oder 2... oder N, $j$ = 1, 2,..., N und $j \neq i$; und
Berechnen (204) durch den Positionierungsserver von Koordinaten des zu positionierenden Endgeräts gemäß den N-1 Entfernungsformeln $r_{j,i} = c^*(Td_i - Td_j) + L_{2,j} - L_{2,i}$ und einer Berechnungsformel eines Ankunftszeitunterschiedsverfahrens (TDOA-Verfahrens).

3. Verfahren nach Anspruch 2, wobei das Berechnen durch den Positionierungsserver von Koordinaten des zu positionierenden Endgeräts gemäß den N-1 Entfernungsformeln $r_{j,i} = c^*(Td_i - Td_j) + L_{2,j} - L_{2,i}$ und einer Berechnungsformel eines Ankunftszeitunterschieds-TDOA-Verfahrens umfasst:

Berechnen durch den Positionierungsserver der Koordinaten des zu positionierenden Endgeräts durch Substituieren der N-1 Entfernungsformeln $r_{j,i} = c^*(Td_i - Td_j) + L_{2,j} - L_{2,i}$ in die Berechnungsformel $2[X_{j,i}, Y_{j,i}, Z_{j,i}, r_{j,i}]^*$ $[x, y, z, L_{1,i}]^T = K_j - K_i - r_{j,i}^2$ des TDOA-Verfahrens, wobei $(x, y, z)$ die Koordinaten des zu positionierenden Endgeräts bezeichnet, $X_{j,i}, Y_{j,i}, L_{2,i}$ jeweilige Koordinatenunterschiede auf der Achse $X$, $Y$ und $Z$ zwischen Koordinaten $(X_j, Y_j, Z_j)$ der Positionierungsbasisstation $j$ und Koordinaten $(X_i, Y_i, Z_i)$ der Positionierungsbasis-station $i$ bezeichnet; $K_j$ eine Quadratsumme der Koordinaten der Positionierungsbasisstation $j$ bezeichnet, $K_j = X_j^2 + Y_j^2 + Z_j^2$, $K_i$ eine Quadratsumme der Koordinaten der Positionierungsbasisstation $i$ bezeichnet, und $K_i = X_i^2 + Y_i^2 + Z_i^2$;

wobei zum Erhalten der X-Achsenkoordinate und der Y-Achsenkoordinate in den Koordinaten $(x, y, z)$ des zu positionierenden Endgeräts N größer als oder gleich 4 ist; wobei zum Erhalten der $X$-Achsenkoordinate, der $Y$-Achsenkoordinate und der $Z$-Achsenkoordinate in den Koordinaten $(x, y, z)$ des zu positionierenden Endgeräts N größer als oder gleich 5 ist;

und/oder

wobei vor dem getrennten Empfangen durch einen Positionierungsserver von Informationen, die $r_1$ und $R_1$, $r_2$ und $R_2$, $r_N$ und $R_N$ umfassen, die von N-Positionierungsbasisstationen gesendet werden, das Verfahren ferner umfasst:

Empfangen (301) durch den Positionierungsserver einer Positionierungsdienstanforderung, die von einer Mobility Management Entity MME gesendet wird, wobei die Positionierungsdienstanforderung verwendet wird, um das zu positionierende Endgerät zu positionieren; und

Senden (302) durch den Positionierungsserver zweiter Genehmigungsinformationen und zweiter Hilfsinformationen an das zu positionierende Endgerät, und Senden dritter Genehmigungsinformationen und dritter Hilfsinformationen an das Referenzendgerät an einem festen Ort, wobei die zweiten und dritten Genehmigungsinformationen verwendet werden, um das zu positionierende Endgerät und das Referenzendgerät an einem festen Ort zu benachrichtigen, das Positionieren zu starten, und die zweiten und dritten Hilfsinformationen verwendet werden, um N Positionierungsbasisstationen zu identifizieren.

4. Positionierungssystem, das einen Positionierungsserver, N Positionierungsbasisstationen, ein Referenzendgerät an einem festen Ort, ein zu positionierendes Endgerät und eine Mobility Management Entity MME umfasst, wobei N größer oder gleich 3 ist;

wobei das zu positionierende Endgerät dazu konfiguriert ist, eine Positionierungsdienstanforderung an die MME zu senden und ein Positionierungsreferenzsignal an die N Positionierungsbasisstationen zu senden, und ferner dazu konfiguriert ist, die Koordinaten des zu positionierenden Endgeräts, die von der MME gesendet werden, zu empfangen, wobei die Positionierungsdienstanforderung verwendet wird, um das zu positionierende Endgerät zu positionieren;

das Referenzendgerät an einem festen Ort dazu konfiguriert ist, ein Positionierungsreferenzsignal an die Positionierungsbasisstation zu senden; und

die MME dazu konfiguriert ist, die Positionierungsdienstanforderung, die von dem zu positionierenden Endgerät gesendet wird, zu empfangen, um die Positionierungsdienstanforderung zu bestimmen und die Positionierungsdienstanforderung an den Positionierungsserver zu senden; und ferner dazu konfiguriert ist, die Koordinaten des zu positionierenden Endgeräts, die von dem Positionierungsserver gesendet werden, zu empfangen und die Koordinaten des zu positionierenden Endgeräts an das zu positionierende Endgerät, das den Positionierungsdienst anfordert, zu senden, wobei der Positionierungsdienst verwendet wird, um das zu positionierende Endgerät zu positionieren;

der Positionierungsserver dazu konfiguriert ist, Informationen, die von der Positionierungsbasisstation gesendet werden, die $r_1$ und $R_1$, $r_2$ und $R_2$, ... $r_N$ und $R_N$ umfassen, getrennt zu empfangen, wobei $r_1$, $r_2$ $r_N$ Zeitpunkte be-zeichnen, zu denen Positionierungsreferenzsignale, die von dem zu positionierenden Endgerät gesendet werden, bei den N Positionierungsbasisstationen eintreffen, wobei $R_1$, $R_2$ ... $R_N$ Zeitpunkte bezeichnen, zu denen Positionierungsreferenzsignale, die von dem Referenzendgerät an dem festen Ort gesendet werden, bei den N Positionierungsbasisstationen eintreffen; und die Koordinaten des zu positionierenden Endgeräts gemäß $r_1$, $r_2$ ... $r_N$ und $R_1$, $R_2$ ... $R_N$ zu berechnen;

wobei vor dem getrennten Empfangen durch den Positionierungsserver Informationen, die $r_1$ und $R_1$, $r_2$ und $R_2$, ..., $r_N$ und $R_N$ umfassen, die von den N Positionierungsbasisstationen gesendet werden, der Positionierungsserver ferner konfiguriert ist, um: erste Genehmigungsinformationen und erste Hilfsinformationen an die N Positionierungsbasisstationen zu senden, wobei die ersten Genehmigungsinformationen verwendet werden, um die N Positionierungsbasisstationen zu benachrichtigen, das Positionieren zu starten, und die ersten Hilfsinformationen verwendet werden, um das zu positionierende Endgerät und das Referenzendgerät an einem festen Ort zu identifizieren.

**Revendications**

1. Procédé de positionnement, comprenant :

    l'envoi, par un terminal à positionner, d'une demande de service de positionnement à une MME et d'un signal de référence de positionnement à N stations de base de positionnement, la demande de service de positionnement étant utilisée pour positionner le terminal à positionner et N étant supérieur ou égal à 3 ;
    l'envoi, par un terminal de référence à un emplacement fixe, d'un signal de référence de positionnement aux N stations de base de positionnement ;
    la réception, par la MME, de la demande de service de positionnement envoyée par le terminal à positionner, la détermination, par la MME, de la demande de service de positionnement et l'envoi, par la MME, de la demande de service de positionnement à un serveur de positionnement ;
    la réception séparée (101), par le serveur de positionnement, d'informations comprenant $r_1$ et $R_1$, $r_2$ et $R_2$, ..., $r_N$ et $R_N$ envoyées par les N stations de base de positionnement, $r_1$, $r_2$ ... $r_N$ désignant des instants temporels où les signaux de référence de positionnement envoyés par le terminal à positionner arrivent aux N stations de base de positionnement, $R_1$, $R_2$ ... $R_N$ désignant des instants temporels où les signaux de référence de positionnement envoyés par le terminal de référence à l'emplacement fixe arrivent aux N positionnement stations de base ;
    le calcul (102), par le serveur de positionnement, des coordonnées du terminal à positionner selon $r_1$, $r_2$ ... $r_N$ et $R_1$, $R_2$ ... $R_N$,
    dans lequel avant de recevoir séparément, par le serveur de positionnement, des informations comprenant $r_1$ et $R_1$, $r_2$ et $R_2$, ..., $r_N$ et $R_N$ envoyées par les N stations de base de positionnement, le procédé comprend en outre : l'envoi (302), par le serveur de positionnement, de premières informations d'autorisation et de premières informations auxiliaires aux N stations de base de positionnement, les premières informations d'autorisation étant utilisées pour notifier aux N stations de base de positionnement de commencer le positionnement et les premières informations auxiliaires étant utilisées pour identifier le terminal à positionner et le terminal de référence à un emplacement fixe ;
    la réception, par la MME, des coordonnées du terminal à positionner envoyées par le serveur de positionnement ;
    l'envoi, par la MME, des coordonnées du terminal à positionner au terminal à positionner demandant le service de positionnement, le service de positionnement étant utilisé pour positionner le terminal à positionner.

2. Procédé selon la revendication 1, dans lequel le calcul, par le serveur de positionnement, des coordonnées du terminal à positionner selon $r_1$, $r_2$ ... $r_N$ et $R_1$, $R_2$ ... $R_N$, comprend :

    le calcul (202), par le serveur de positionnement, de N différences de temps, $Td_1$, $Td_2$... $Td_N$ selon $r_1$, $r_2$ ... $r_N$ et $R_1$, $R_2$ ... $R_N$, $Td_1 = R_1 - r_1$, $Td_2 = R_2 - r_2$... $Td_N = R_N - r_N$ ;
    l'obtention (203), par le serveur de positionnement, de N-l formules de distance $r_{j,i} = c*(Td_i - Td_j) + L_{2,j} - L_{2,i}$ entre le terminal à positionner et les stations de base de positionnement selon la formule $Td_j - Td_i =(L_{2,j} - L_{1,j} - L_{2,i} - L_{1,i})/c$, $r_{j,i} = L_{1,j} - L_{1,i}$, $L_{2,j}$ désignant une distance entre le terminal de référence à un emplacement fixe et une station de base de positionnement $j$, $L_{2,i}$ désignant une distance entre le terminal de référence à un emplacement fixe et une station de base de positionnement $i$, $L_{2,j}$ et $L_{2,i}$ étant obtenus à partir de la mesure, $L_{1,j}$ désignant une distance entre le terminal à positionner et une station de base de positionnement $j$, $L_{1,i}$ désignant une distance entre le terminal à positionner et une station de base de positionnement $i$, $c$ désignant une vitesse de la lumière ; $i$=l ou 2... ou N, $j = 1, 2,..., N$ et $j \neq i$ ; et
    le calcul (204), par le serveur de positionnement, des coordonnées du terminal à positionner selon les N-1 formules de distance $r_{j,i} =c*(Td_i - Td_j) + L_{2,j} - L_{2,i}$ et une formule de calcul d'un procédé de différence de temps d'arrivée TDOA.

3. Procédé selon la revendication 2, dans lequel le calcul, par le serveur de positionnement, des coordonnées du terminal à positionner selon les N-l formules de distance $r_{j,i} = c*(Td_i - Td_j) + L_{2,j} - L_{2,i}$ et une formule de calcul d'un procédé de différence de temps d'arrivée TDOA, comprend :

    le calcul, par le serveur de positionnement, des coordonnées du terminal à positionner par substitution des N-l formules de distance $r_{j,i} =c*(Td_i - Td_j) + L_{2,j} - L_{2,i}$ dans la formule de calcul $2[X_{j,i}, Y_{j,i}, Z_{j,i}, r_{j,i}] * [x, y, z, L_{1,i}]^T = K_j - K_i - r_{j,i}^2$ du procédé TDOA, $(x, y, z)$ désignant les coordonnées du terminal à positionner, $X_{j,i}, Y_{j,i}, Z_{j,i}$ désignant respectivement des différences de coordonnées sur l'axe $X$, $Y$ et $Z$ entre des coordonnées $(X_j, Y_j, Z_j)$ de la station de base de positionnement $j$ et des coordonnées $(X_i, Y_i, Z_i)$ de la station de base de positionnement $i$ ;

$K_j$, désignant une somme au carré des coordonnées de la station de base de positionnement $j$, $K_j = X_j^2 + Y_j^2 + Z_j^2$, $K_i$ désignant une somme au carré des coordonnées de la station de base de positionnement $i$ et $K_i = X_i^2 + Y_i^2 + Z_i^2$ ;

dans lequel pour obtenir la coordonnée d'axe X et la coordonnée d'axe Y dans les coordonnées (x, y, z) du terminal à positionner, N est supérieur ou égal à 4 ; pour obtenir la coordonnée d'axe X, la coordonnée d'axe Y et la coordonnée d'axe Z dans les coordonnées (x, y, z) du terminal à positionner, N est supérieur ou égal à 5 ; et/ou

dans lequel, avant de recevoir séparément, par un serveur de positionnement, les informations comprenant $r_1$ et $R_1$, $r_2$ et $R_2$, ... $r_N$ et $R_N$ envoyées par N stations de base de positionnement, le procédé comprend en outre :

la réception (301), par le serveur de positionnement, d'une demande de service de positionnement envoyée par une entité de gestion de mobilité MME, la demande de service de positionnement étant utilisée pour positionner le terminal à positionner ; et

l'envoi (302), par le serveur de positionnement, de deuxièmes informations d'autorisation et de deuxièmes informations auxiliaires au terminal à positionner et l'envoi de troisièmes informations d'autorisation et de troisièmes informations auxiliaires au terminal de référence à un emplacement fixe, où les deuxièmes et troisièmes informations d'autorisation sont utilisées pour notifier au terminal à positionner et au terminal de référence à un emplacement fixe de commencer le positionnement et les deuxièmes et troisièmes informations auxiliaires sont utilisées pour identifier N stations de base de positionnement.

4. Système de positionnement, comprenant un serveur de positionnement, N stations de base de positionnement, un terminal de référence à un emplacement fixe, un terminal à positionner et une entité de gestion de mobilité MME, N est supérieur ou égal à 3 ;

dans lequel le terminal à positionner est configuré pour envoyer une demande de service de positionnement à la MME et pour envoyer un signal de référence de positionnement aux N stations de base de positionnement et est en outre configuré pour recevoir les coordonnées du terminal à positionner envoyées par la MME, la demande de service de positionnement étant utilisée pour positionner le terminal à positionner ;

le terminal de référence à un emplacement fixe est configuré pour envoyer un signal de référence de positionnement à la station de base de positionnement ; et

la MME est configurée pour recevoir la demande de service de positionnement envoyée par le terminal à positionner, pour déterminer la demande de service de positionnement et pour envoyer la demande de service de positionnement au serveur de positionnement ; et configurée en outre pour recevoir les coordonnées du terminal à positionner envoyées par le serveur de positionnement et pour envoyer les coordonnées du terminal à positionner au terminal à positionner demandant le service de positionnement, le service de positionnement étant utilisé pour positionner le terminal à positionner ;

le serveur de positionnement est configuré pour recevoir séparément des informations comprenant $r_1$ et $R_1$, $r_2$ et $R_2$, ... $r_N$ et $R_N$ envoyées par les N stations de base de positionnement, $r_1$, $r_2$ ... $r_N$ désignant des instants temporels où les signaux de référence de positionnement envoyés par le terminal à positionner arrivent aux N stations de base de positionnement, $R_1$, $R_2$ ... $R_N$ désignant des instants temporels où les signaux de référence de positionnement envoyés par le terminal de référence à l'emplacement fixe arrivent aux N stations de base de positionnement ; et pour calculer les coordonnées du terminal à positionner selon $r_1$, $r_2$ ... $r_N$ et $R_1$, $R_2$ ... $R_N$ ;

dans lequel avant la réception séparée, par le serveur de positionnement, des informations comprenant $r_1$ et $R_1$, $r_2$ et $R_2$, ..., $r_N$ et $R_N$ envoyées par les N stations de base de positionnement, le serveur de positionnement est en outre configuré pour : envoyer des premières informations d'autorisation et des premières informations auxiliaires aux N stations de base de positionnement, les premières informations d'autorisation étant utilisées pour notifier aux N stations de base de positionnement de commencer le positionnement et les premières informations auxiliaires étant utilisées pour identifier le terminal à positionner et le terminal de référence à un emplacement fixe.

a positioning server separately receives information including $r_1$ and $R_1$, $r_2$ and $R_2$, ..., $r_N$ and $R_N$ sent by N positioning base stations

101

the positioning server calculates coordinates of the terminal to be positioned according to $r_1$, $r_2$ ... $r_N$ and $R_1$, $R_2$ ... $R_N$

102

Fig. 1

a positioning server separately receives information including $r_1$ and $R_1$, $r_2$ and $R_2$, ..., $r_N$ and $R_N$ sent by N positioning base stations

201

the positioning server calculates N time differences $Td_1, Td_2 \cdots Td_N$ according to $r_1$, $r_2$ ... $r_N$ and $R_1$, $R_2$ ... $R_N$

202

the positioning server obtains N-1 distance formulas $r_{j,i} = c*(Td_i - Td_j) + L_{2,j} - L_{2,i}$ between the terminal to be positioned and the positioning base stations according to the formula $Td_j - Td_i = (L_{2,j} - L_{1,j} - L_{2,i} + L_{1,i})/c$

203

the positioning server calculates coordinates of the terminal to be positioned according to the N-1 distance formulas $r_{j,i} = c*(Td_i - Td_j) + L_{2,j} - L_{2,i}$ and a calculation formula of the Time difference of arrival TDOA method

204

Fig. 2

the positioning server receives a positioning service request sent by a MME — 301

the positioning server sends first authorization information and first auxiliary information to the N positioning base stations, sends second authorization information and second auxiliary information to the terminal to be positioned, and sends third authorization information and third auxiliary information to the reference terminal at a fixed location — 302

a positioning server separately receives information including $r_1$ and $R_1$, $r_2$ and $R_2$, ..., $r_N$ and $R_N$ sent by N positioning base stations — 303

the positioning server calculates N time differences $Td_1, Td_2 \cdots Td_N$ according to $r_1$, $r_2$ ... $r_N$ and $R_1, R_2 ... R_N$ — 304

the positioning server obtains N-1 distance formulas $r_{j,i} = c * (Td_i - Td_j) + L_{2,j} - L_{2,i}$ between the terminal to be positioned and the positioning base stations according to the formula $Td_j - Td_i = (L_{2,j} - L_{1,j} - L_{2,i} + L_{1,i}) / c$ — 305

the positioning server calculates coordinates of the terminal to be positioned according to the N-1 distance formulas $r_{j,i} = c * (Td_i - Td_j) + L_{2,j} - L_{2,i}$ and a calculation formula of the Time difference of arrival TDOA method — 306

Fig. 3

a positioning base station receives positioning reference signals sent by the terminal to be positioned and the reference terminal at a fixed location ⟋401

the positioning base station obtains a time instant $r_i$ when the positioning reference signal sent by the terminal to be positioned arrives at the positioning base station, and a time instant $R_i$ when the positioning reference signal sent by the reference terminal at a fixed location arrives at the positioning base station ⟋402

the positioning base station sends the information including $r_i$ and $R_i$ to the positioning server, so that the positioning server calculates the coordinates of the terminal to be positioned according to $r_i$ and $R_i$ ⟋403

Fig. 4

the positioning base station sends a positioning service request to the MME — 501

↓

the positioning base station receives first authorization information and first auxiliary information sent by the positioning server — 502

↓

the positioning base station receives the positioning reference signals sent by the terminal to be positioned and the reference terminal at a fixed location — 503

↓

the positioning base station obtains a time instant $r_i$ when the positioning reference signal sent by the terminal to be positioned arrives at the positioning base station, and a time instant $R_i$ when the positioning reference signal sent by the reference terminal at a fixed location arrives at the positioning base station — 504

↓

the positioning base station sends the information including $r_i$ and $R_i$ to the positioning server, so that the positioning server calculates the coordinates of the terminal to be positioned according to $r_i$ and $R_i$ — 505

Fig. 5

Fig. 6

11

12

| First Receiving Module | Calculation Module |

Fig. 7

11

12

13

| First Receiving Module | Calculation Module | First Sending Module |

Fig. 8

Positioning Server

1011

First Interface

1012

1013

First Memory

First Bus

First Processor

1014

Fig. 9

| Second Receiving Module | Obtaining Module | Second Sending Module |

21  22  23

Fig. 10

Positioning Server

1111 — Second Interface

1113 — Second Memory

1112 — Second Bus

1114 — Second Processor

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005130669 A1
- US 2009322615 A1